# EUROPÄISCHE PATENTANMELDUNG

(11) **EP 4 250 146 A1**
(43) Veröffentlichungstag der Anmeldung: **27.09.2023**
(21) Anmeldenummer: 22163888.5
(22) Anmeldetag: 23.03.2022
(51) Int. Cl.: G06F 21/44, H04L 9/40

(54) **INTERAKTION PHYSISCHER ENTITÄTEN**

(71) Anmelder: Siemens Aktiengesellschaft, 80333 München (DE)
(72) Erfinder: Falk, Rainer, 85586 Poing (DE); Fischer, Kai, 85598 Baldham (DE); Fries, Steffen, 85598 Baldham (DE); Heintel, Markus, 81377 München (DE); Klasen, Wolfgang, 85521 Ottobrunn (DE); Maftun, Aliza, 81247 München (DE)
(74) Vertreter: Siemens Patent Attorneys

(57) **Zusammenfassung**

Gemäß einem Verfahren zur Interaktion einer ersten physischen Entität (1a) mit einer zweiten physischen Entität (2a) wird mittels der ersten physischen Entität (1a) eine Interaktionsanfrage von der zweiten physischen Entität (2a) erhalten. Mittels der ersten physischen Entität (1a) wird in Reaktion auf die Interaktionsanfrage eine Verifikationsanfrage an eine erste virtuelle Entität (1b), welche eine virtuelle Repräsentation der ersten physischen Entität (1a) ist, übermittelt. Mittels der ersten virtuellen Entität (1b) wird in Reaktion auf die Verifikationsanfrage ein Maß für eine Vertrauenswürdigkeit der zweiten physischen Entität (2a) bestimmt. Eine Interaktion der ersten physischen Entität (1a) mit der zweiten physischen Entität (2a) wird abhängig von dem Maß für die Vertrauenswürdigkeit der zweiten physischen Entität (2a) zugelassen.

## Beschreibung

Die vorliegende Erfindung betrifft ein Verfahren zur Interaktion einer ersten physischen Entität mit einer zweiten physischen Entität, wobei mittels der ersten physischen Entität eine Interaktionsanfrage von der zweiten physischen Entität erhalten wird. Die Erfindung betrifft ferner ein entsprechendes System und ein Computerprogrammprodukt.

Zentrale Aspekte im Kontext der sogenannten Industrie 4.0, auch als I4.0 bezeichnet, sind die Integration von cyberphysischen Systemen, CPS (englisch: "cyber-physical systems"), und Geräten des sogenannten Internets der Dinge, IoT (englisch: "internet of things"). Ein Ziel ist es beispielsweise, dynamische, selbstorganisierende und flexible unternehmensübergreifende Wertschöpfungsketten zu schaffen. Die Vision von I4.0 beschreibt offene digitale Ökosysteme, in denen die physischen Vermögenswerte durch ihre digitalen Zwillinge, DTs (englisch: "digital twins"), repräsentiert werden. Die DTs stellen Informationen über die jeweiligen Entitäten in einer maschinenlesbaren und verarbeitbaren Sprache bereit und können unter Umständen teilweise direkt miteinander interagieren. DTs sind eine weithin erforschte und angenommene Methode zur Beschleunigung der Digitalisierung im industriellen Umfeld.

Bisher beruhen die Vertrauensbeziehungen zwischen Entitäten beispielsweise auf historischen Beziehungen oder positiven Empfehlungen einer vertrauenswürdigen Stelle. Für die rasche Digitalisierung und Anpassung der Industrie 4.0 ist wünschenswert, ad-hoc eine zuverlässige Kommunikation zwischen verschiedenen physischen Entitäten, etwa Geräten, Maschinen oder Hardware- und/oder Softwarekomponenten bereitzustellen. Daher reichen herkömmliche Methoden zum Aufbau von Vertrauen im I4.0-Umfeld für eine sichere Interaktion zwischen physischen Entitäten nicht aus.

In der Veröffentlichung "IIoT Value Chain Security - The Role of Trustworthiness" des Bundesministeriums für Wirtschaft und Klimaschutz vom 23.09.2020 wird eine Datenstruktur als Vertrauenswürdigkeitsprofil vorgeschlagen, das in einer Lieferkette den systematischen Austausch der Erwartungen von Käufern und der entsprechenden Fähigkeiten der potenziellen Lieferanten, ermöglicht. Der Grundgedanke des Vertrauenswürdigkeitsprofils besteht darin, dass der Käufer seine Vertrauenswürdigkeitserwartungen auflistet und der Lieferant einen überprüfbaren Nachweis seiner entsprechenden Vertrauenswürdigkeitsfähigkeiten erbringt. Auf der Grundlage der erhaltenen Fähigkeiten kann der Einkäufer entweder seine Vertrauensbedingungen mit dem Lieferanten aushandeln oder den Grad des Vertrauens in seiner zukünftigen Kommunikation mit diesem bestimmten Lieferanten bestimmen.

Es ist eine Aufgabe der vorliegenden Erfindung, eine sichere Interaktion zwischen physischen Entitäten automatisiert sicherzustellen.

Diese Aufgabe wird gelöst durch den jeweiligen Gegenstand der unabhängigen Ansprüche. Vorteilhafte Weiterbildungen und bevorzugte Ausführungsformen sind Gegenstand der abhängigen Ansprüche.

Gemäß einem Aspekt der Erfindung wird ein Verfahren zur Interaktion einer ersten physischen Entität mit einer zweiten physischen Entität angegeben. Mittels der ersten physischen Entität wird eine Interaktionsanfrage von der zweiten physischen Entität erhalten. Mittels der ersten physischen Entität wird in Reaktion auf die Interaktionsanfrage eine Verifikationsanfrage an eine erste virtuelle Entität übermittelt, wobei die erste virtuelle Entität eine virtuelle Repräsentation der ersten physischen Entität ist. Mittels der ersten virtuellen Entität wird in Reaktion auf die Verifikationsanfrage ein Maß für eine Vertrauenswürdigkeit der zweiten physischen Entität bestimmt. Eine Interaktion der ersten physischen Entität mit der zweiten physischen Entität wird abhängig von dem Maß für die Vertrauenswürdigkeit der zweiten physischen Entität zugelassen, beispielsweise mittels der ersten physischen Entität und/oder der ersten virtuellen Entität.

Die zweite physische Entität übermittelt insbesondere die Interaktionsanfrage an die erste physische Entität. Die Interaktionsanfrage beinhaltet beispielsweise eine Information beziehungsweise eine Anfrage dahingehend, dass die zweite physische Entität beabsichtigt, mit der ersten physischen Entität zu interagieren. Eine Interaktion kann dabei einen Austausch von Daten und/oder Informationen und/oder Signalen und/oder Befehlen beinhalten und kann bidirektional oder unidirektional erfolgen.

Eine physische Entität kann beispielsweise ein Gerät sein. Ein Gerät zeichnet sich dabei hier in dem Folgenden beispielweise dadurch aus, dass es mindestens eine Hardwarekomponente und optional eine oder mehrere Softwarekomponenten beinhaltet. Eine Hardwarekomponente als solche stellt ebenfalls eine Möglichkeit für eine physische Entität dar. Auch eine Softwarekomponente als solche kann eine physische Entität darstellen. Eine Softwarekomponente ist konkret auf einem Datenträger oder einem programmierbaren Bauelement implementiert und kann daher ebenfalls als physisch aufgefasst werden. Insbesondere wird der Begriff physisch hier und im Folgenden als Abgrenzung zum Begriff virtuell verwendet.

Die erste physische Entität kann beispielsweise ein erstes Gerät sein, zum Beispiel ein IoT-Gerät oder ein industrielles Steuergerät. Die zweite physische Entität kann beispielsweise ein zweites Gerät sein, das mit dem ersten Gerät über ein Datennetzwerk kommunikativ verbunden ist. Die zweite physische Entität kann beispielsweise ein zweites IoT-Gerät oder ein zweites industrielles Steuergerät sein. Ebenso ist es beispielsweise möglich, dass die zweite physische Entität eine Komponente des ersten Geräts ist. Die Komponente kann im ersten Gerät fest oder wechselbar, beispielsweise als Einstecckarte, integriert sein. Ebenso kann die Komponente beispielsweise ein mit dem ersten Gerät verbundenes Ansteckmodul oder Erweiterungsmodul sein.

Eine virtuelle Entität kann grundsätzlich als virtuelle, insbesondere digitale, Repräsentation einer zugeordneten physischen Entität verstanden werden. Insbesondere kann eine virtuelle Entität als digitaler Zwilling, DT (englisch: "digital twin"), der entsprechenden physischen Entität verstanden werden. Dementsprechend ist die erste virtuelle Entität beispielsweise ein digitaler Zwilling der ersten physischen Entität. Beispielsweise kann eine zweite virtuelle Entität ein digitaler Zwilling der zweiten physischen Entität sein.

Ein digitaler Zwilling kann als virtuelle Darstellung eines realen Objekts, zum Beispiel eines Geräts, einer Maschine und so weiter, oder einer sonstigen physischen Entität, beispielweise einer Softwarekomponente, aufgefasst werden. In der I4.0-Terminologie wird diese digitale Repräsentation beispielsweise auch als Verwaltungsschale, AAS (englisch "asset administration shell"), bezeichnet. Digitale Zwillinge können insbesondere auf IT-Systemen, insbesondere entsprechenden Recheneinheiten, realisiert werden und sie können beispielsweise über eine Adresse, etwa eine IP-Adresse (englisch: "internet protocoll", IP), einen DNS-Namen (englisch: "domain name system", DNS), eine URL (englisch: "uniform resource locator"), und so weiter, angesprochen werden.

Beispielsweise im Kontext von Lieferketten ist es sehr vorteilhaft, wenn I4.0-Geräte, I4.0-Komponenten und I4.0-Produkte eine gemeinsame Sprache haben, um untereinander automatisiert kommunizieren zu können. Daher ist ein standardisiertes Format wie AAS von Vorteil.

Die erste virtuelle Entität ist beispielsweise als erste Verwaltungsschale ausgestaltet und die zweite virtuelle Entität ist insbesondere als zweite Verwaltungsschale ausgestaltet.

Eine physische Entität, insbesondere die erste und/oder die zweite physische Entität, kann insbesondere eine oder mehrere Recheneinheiten, zu denen auch eine oder mehrere Steuereinheiten oder dergleichen zählen können, eine oder mehrere Kommunikationsschnittstellen, beispielsweise Hardware- und/oder Softwareschnittstellen, oder dergleichen beinhalten. Verfahrensschritte, die mittels einer physischen Entität durchgeführt werden, können insbesondere mittels der wenigstens einen entsprechenden Recheneinheit, beispielsweise unter Einbeziehung der wenigstens einen Kommunikationsschnittstelle, durchgeführt werden.

Eine virtuelle Entität, insbesondere die erste und/oder die zweite virtuelle Entität, ist beispielsweise ausschließlich computerimplementiert also auf einer oder mehrere entsprechenden Recheneinheiten der jeweiligen virtuellen Entität. Eine oder mehrere Recheneinheiten können dabei jedoch auch mehrere virtuelle Entitäten implementieren. Verfahrensschritte, die mittels einer virtuellen Entität durchgeführt werden, werden insbesondere mittels der entsprechenden einen oder mehreren Recheneinheiten durchgeführt, welche die jeweilige virtuelle Entität implementiert.

Eine physische Entität und eine zugehörige virtuelle Entität, also vorliegend etwa die erste physische Entität und die zugehörige erste virtuelle Entität ebenso wie die zweite physische Entität und die zugehörige zweite virtuelle Entität, können miteinander über ihre jeweiligen Recheneinheiten und gegebenenfalls Hardware und/oder Softwareschnittstellen miteinander kommunizieren und dementsprechend Daten und Informationen austauschen.

Durch die Erfindung wird eine hochgradig automatisierte, insbesondere vollautomatisierte, Möglichkeit geschaffen, eine sichere Interaktion zwischen der ersten und der zweiten physischen Entität zu realisieren, indem die erste physische Entität die Vertrauenswürdigkeit der zweiten physischen Entität mittels der ersten virtuellen Entität verifiziert.

Insbesondere ermöglicht die Erfindung, die Vertrauenswürdigkeit zwischen verschiedenen I4.0 Entitäten während ihres gesamten Lebenszyklus sicherzustellen.

Gemäß zumindest einer Ausführungsform des erfindungsgemäßen Verfahrens werden in Reaktion auf die Verifikationsanfrage Vertrauenswürdigkeitsinformationen betreffend wenigstens ein Vertrauenswürdigkeitskriterium, insbesondere ein vordefiniertes Vertrauenswürdigkeitskriterium, der zweiten physischen Entität bestimmt, insbesondere wenigstens zum Teil mittels der ersten virtuellen Entität. Das Maß für die Vertrauenswürdigkeit der zweiten physischen Entität wird abhängig von den Vertrauenswürdigkeitsinformationen bestimmt.

Gemäß zumindest einer Ausführungsform wird, zum Bestimmen der Vertrauenswürdigkeitsinformationen, mittels der ersten virtuellen Entität in Reaktion auf die Verifikationsanfrage eine Aufforderung zur Bereitstellung der Vertrauenswürdigkeitsinformationen an eine zweite virtuelle Entität übermittelt, wobei die zweite virtuelle Entität eine virtuelle Repräsentation der zweiten physischen Entität ist. Mittels der zweiten virtuellen Entität werden in Reaktion auf die Aufforderung zur Bereitstellung der Vertrauenswürdigkeitsinformationen die Vertrauenswürdigkeitsinformationen an die erste virtuelle Entität übermittelt.

Gemäß zumindest einer Ausführungsform beinhaltet die Aufforderung zur Bereitstellung der Vertrauenswürdigkeitsinformationen wenigstens eine Definition und/oder Beschreibung des wenigstens einen Vertrauenswürdigkeitskriteriums.

Die Definition oder Beschreibung des wenigstens einen Vertrauenswürdigkeitskriterium kann beispielsweise Erwartungen seitens der ersten virtuellen oder ersten physischen Entität an die Vertrauenswürdigkeit der zweiten physischen Entität beschreiben oder betreffen. Indem die Aufforderung zur Bereitstellung bereits die Definition und/oder Beschreibung des wenigstens einen Vertrauenswürdigkeitskriteriums beinhaltet, können die von der zweiten virtuellen Entität bereitgestellten Vertrauenswürdigkeitsinformationen konkret an die Definition und/oder Beschreibung angepasst übermittelt und bereitgestellt werden. Eine Verarbeitung und Prüfung der Vertrauenswürdigkeitsinformationen durch die erste virtuelle Entität kann damit mit verlängertem Rechenaufwand und gegebenenfalls innerhalb kürzerer Zeit durchgeführt werden.

Grundsätzlich ist es jedoch auch möglich, dass die Aufforderung zur Bereitstellung der Vertrauenswürdigkeitsinformationen keine solche Definition und/oder Beschreibung beinhaltet. Die zweite virtuelle Entität kann dann alle gegebenenfalls zur Verfügung stehenden Vertrauenswürdigkeitsinformationen übermitteln.

Gemäß zumindest einer Ausführungsform wird mittels der ersten virtuellen Entität eine vorgegebene Regel zur Bewertung der Vertrauenswürdigkeit der zweiten physischen Entität erhalten, insbesondere erhalten und gespeichert. Das Maß für die Vertrauenswürdigkeit der zweiten physischen Entität wird abhängig von der Regel bestimmt.

Die Regel kann beispielsweise vor der Interaktionsanfrage von der ersten virtuellen Entität gespeichert werden.

Insbesondere wird das Maß für die Vertrauenswürdigkeit der zweiten physischen Entität abhängig von den Vertrauenswürdigkeitsinformationen und der vorgegebenen Regel bestimmt. Dazu werden beispielsweise die Vertrauenswürdigkeitsinformationen mit den Regeln verglichen oder mit den Regeln abgeglichen.

Das Maß für die Vertrauenswürdigkeit kann dann beispielsweise in zwei oder mehr Stufen festgelegt oder bestimmt werden.

Gemäß zumindest einer Ausführungsform wird das Maß für die Vertrauenswürdigkeit der zweiten physischen Entität, insbesondere abhängig von der Regel und/oder den Vertrauenswürdigkeitsinformationen, als binäres Maß bestimmt.

Dies kann insbesondere derart verstanden werden, dass das Maß für die Vertrauenswürdigkeit einen von genau zwei verschiedenen Werten, beispielsweise 0 und 1, annehmen kann, wobei einer der zwei verschiedenen Werte einer Situation entspricht, in der die Vertrauenswürdigkeit gegeben ist und der andere Wert einer Situation entspricht, indem die Vertrauenswürdigkeit nicht gegeben ist.

Gemäß zumindest einer Ausführungsform wird die Interaktion der zweiten physischen Entität mit der ersten physischen Entität zugelassen, beispielsweise genau dann zugelassen, wenn das Maß für die Vertrauenswürdigkeit der zweiten physischen Entität einem ersten vorgegebenen Wert entspricht.

Gemäß zumindest einer Ausführungsform wird die Interaktion der zweiten physischen Entität mit der ersten physischen Entität nicht zugelassen, insbesondere genau dann nicht zugelassen, wenn das Maß für die Vertrauenswürdigkeit der zweiten physischen Entität einem zweiten vorgegebenen Wert entspricht, der von dem ersten vorgegebenen Wert verschieden ist.

Gemäß zumindest einer Ausführungsform wird das Maß für die Vertrauenswürdigkeit der zweiten physischen Entität bestimmt, indem, insbesondere abhängig von der Regel und/oder den Vertrauenswürdigkeitsinformationen, eine, insbesondere genau eine, von drei oder mehr Vertrauenswürdigkeitsstufen für die zweite physische Entität bestimmt wird.

Mit anderen Worten entspricht das Maß für die Vertrauenswürdigkeit dann der bestimmten Vertrauenswürdigkeitsstufe.

Gemäß zumindest einer Ausführungsform wird die Interaktion der zweiten physischen Entität mit der ersten physischen Entität zugelassen, insbesondere genau dann zugelassen, beispielsweise uneingeschränkt zugelassen, wenn das Maß für die Vertrauenswürdigkeit der zweiten physischen Entität einer ersten vorgegebenen Vertrauenswürdigkeitsstufe der drei oder mehr Vertrauenswürdigkeitsstufen entspricht.

Gemäß zumindest einer Ausführungsform wird die Interaktion der zweiten physischen Entität mit der ersten physischen Entität eingeschränkt zugelassen, insbesondere genau dann eingeschränkt zugelassen, wenn das Maß für die Vertrauenswürdigkeit der zweiten physischen Entität einer zweiten vorgegebenen Vertrauensstufe der drei oder mehr Vertrauenswürdigkeitsstufen entspricht.

Gemäß zumindest einer Ausführungsform wird die Interaktion der zweiten physischen Entität mit der ersten physischen Entität nicht zugelassen, insbesondere genau dann nicht zugelassen, wenn das Maß für die Vertrauenswürdigkeit der zweiten physischen Entität einer vorgegebenen dritten Vertrauenswürdigkeitsstufe der drei oder mehr Vertrauenswürdigkeitsstufen entspricht.

Solche Ausführungsformen, in denen drei oder mehr Vertrauenswürdigkeitsstufen entsprechend möglich sind und die Interaktion dementsprechend uneingeschränkt, eingeschränkt oder nicht zugelassen wird, haben den Vorteil, dass auch bei eingeschränkter Vertrauenswürdigkeit eine Interaktion nicht vollständig ausgeschlossen werden muss. Beispielsweise können dann lediglich sicherheitsrelevante Interaktionen unterbunden werden oder dergleichen.

Gemäß einem weiteren Aspekt der Erfindung wird ein System mit einer ersten physischen Entität angegeben. Die erste physische Entität ist dazu eingerichtet, von einer zweiten physischen Entität eine Interaktionsanfrage zu erhalten. Das System weist eine erste virtuelle Entität auf, welche eine virtuelle Repräsentation der ersten physischen Entität ist. Die erste physische Entität ist dazu eingerichtet, in Reaktion auf die Interaktionsanfrage eine Verifikationsanfrage an die erste virtuelle Entität zu übermitteln. Die erste virtuelle Entität ist dazu eingerichtet, in Reaktion auf die Verifikationsanfrage ein Maß für eine Vertrauenswürdigkeit der zweiten physischen Entität zu bestimmen. Die erste physische Entität und/oder die erste virtuelle Entität ist dazu eingerichtet, eine Interaktion der ersten physischen Entität mit der zweiten physischen Entität abhängig von dem Maß für die Vertrauenswürdigkeit der zweiten physischen Entität zuzulassen.

Die zweite physische Entität kann in verschiedenen Ausführungsformen des erfindungsgemäßen Systems ebenfalls Teil des erfindungsgemäßen Systems sein.

Gemäß zumindest einer Ausführungsform des Systems enthält das System die zweite physische Entität und die zweite physische Entität ist dazu eingerichtet, die Interaktionsanfrage an die erste physische Entität zu übermitteln.

Weitere Ausführungsformen des erfindungsgemäßen Systems folgen unmittelbar aus den verschiedenen Ausgestaltungen des erfindungsgemäßen Verfahrens und umgekehrt. Insbesondere lassen sich einzelne Merkmale und entsprechende Erläuterungen bezüglich der verschiedenen Ausführungsformen zu dem erfindungsgemäßen Verfahren analog auf entsprechende Ausführungsformen des erfindungsgemäßen Systems übertragen. Insbesondere ist das erfindungsgemäße System zum Durchführen eines erfindungsgemäßen Verfahrens ausgebildet oder programmiert. Insbesondere führt das erfindungsgemäße System das erfindungsgemäße Verfahren durch.

Gemäß einem weiteren Aspekt der Erfindung wird ein Computerprogramm mit Befehlen angegeben. Wenn die Befehle durch ein erfindungsgemäßes System ausgeführt werden, veranlassen die Befehle das System dazu, ein erfindungsgemäßes Verfahren durchzuführen.

Gemäß einem weiteren Aspekt der Erfindung wird ein computerlesbares Speichermedium angegeben, welches ein Computerprogramm gemäß der Erfindung speichert.

Das erfindungsgemäße Computerprogramm und das erfindungsgemäße computerlesbare Speichermedium können als jeweilige Computerprogrammprodukte mit den Befehlen aufgefasst werden.

Unter einer Recheneinheit kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere digitale Signalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Ist im Rahmen der vorliegenden Offenbarung die Rede davon, dass eine Komponente des erfindungsgemäßen Systems oder einer physischen oder virtuellen Entität des Systems, insbesondere einer Recheneinheit des Systems, dazu eingerichtet, ausgebildet, ausgelegt, oder dergleichen ist, eine bestimmte Funktion auszuführen oder zu realisieren, eine bestimmte Wirkung zu erzielen oder einem bestimmten Zweck zu dienen, so kann dies derart verstanden werden, dass die Komponente, über die prinzipielle oder theoretische Verwendbarkeit oder Eignung der Komponente für diese Funktion, Wirkung oder diesen Zweck hinaus, durch eine entsprechende Anpassung, Programmierung, physische Ausgestaltung und so weiter konkret und tatsächlich dazu in der Lage ist, die Funktion auszuführen oder zu realisieren, die Wirkung zu erzielen oder dem Zweck zu dienen.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

Dabei zeigen
- FIG 1: eine schematische Blockdarstellung einer beispielhaften Ausführungsform eines erfindungsgemäßen Systems; und
- FIG 2: eine schematische Blockdarstellung einer ersten vir-tuellen Entität einer weiteren beispielhaften Ausfüh-rungsform eines erfindungsgemäßen Systems.

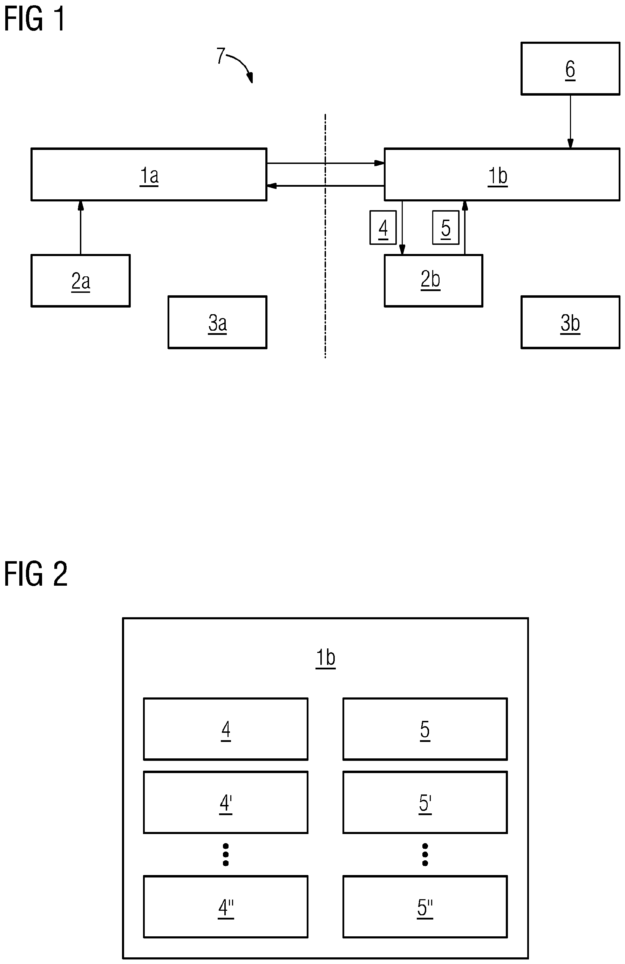

In FIG 1 ist schematisch ein erfindungsgemäßes System 7 in einer Blockdarstellung gezeigt. Das System 7 weist eine erste physische Entität 1a auf sowie eine zweite physische Entität 2a. Das System 7 weist eine erste virtuelle Entität 1b auf, die ein digitaler Zwilling der ersten physischen Entität 1a ist, insbesondere eine AAS der ersten physischen Entität 1a. Das System 7 weist außerdem eine zweite virtuelle Entität 2b auf, die ein digitaler Zwilling der zweiten physischen Entität 2a ist, insbesondere eine AAS der zweiten physischen Entität 2a.

Optional weist das das System 7 eine dritte physische Entität 3a auf sowie eine dritte virtuelle Entität 3b, die ein digitaler Zwilling der dritten physischen Entität 3a ist, insbesondere eine AAS der dritten physischen Entität 3a.

Beispielsweise kann die zweite physische Entität 2a eine Interaktionsanfrage an die erste physische Entität 1a übermitteln, und in Reaktion darauf kann die erste physische Entität 1a eine Verifikationsanfrage an ihren digitalen Zwilling, das heißt an die erste virtuelle Entität 1b, übermitteln. In Reaktion auf die Verifikationsanfrage kann die erste virtuelle Entität 1b ein Maß für eine Vertrauenswürdigkeit der zweiten physischen Entität 2a, beispielsweise unter Nutzung der virtuellen Entität 2b bestimmen. Basierend auf dem Maß für die Vertrauenswürdigkeit für die zweite physische Entität 2a kann die erste physische Entität 1a und/oder die erste virtuelle Entität 1b die Interaktion der ersten physischen Entität mit der zweiten physischen Entität, die durch die Interaktionsanfrage angefragt wurde, zulassen oder nicht zulassen oder eingeschränkt zulassen.

Dabei kann die erste virtuelle Entität 1b beispielsweise in Reaktion auf die Verifikationsanfrage Vertrauenswürdigkeits-informationen 5 betreffend wenigstens ein vorgegebenes Vertrauenswürdigkeitskriterium der zweiten physischen Entität 2a anfordern, indem die erste virtuelle Entität eine Aufforderung zur Bereitstellung der Vertrauenswürdigkeits-informationen 5 an die zweite virtuelle Entität 2b übermittelt. In manchen Ausführungsformen kann die Aufforderung zur Bereitstellung der Vertrauenswürdigkeits-informationen 5 durch die erste virtuelle Entität 1b eine Definition und/oder Beschreibung 4 des wenigstens einen Vertrauenswürdigkeitskriteriums beinhalten.

Die erste virtuelle Entität 1b kann dann abhängig von einer vorgegebenen Regel 6 das Maß für die Vertrauenswürdigkeit bestimmen, insbesondere durch einen Abgleich der vorgegebenen Regel 6 mit den Vertrauenswürdigkeitsinformationen 5. Die Regel 6 kann beispielsweise auch als Die Richtlinie für eine Vertrauensentscheidung bezeichnet werden.

Die Vertrauenswürdigkeitsinformationen 5 können beispielsweise eine oder mehrere Qualifikationsanforderungen oder Standardisierungsanforderungen beinhalten. Beispielsweise können die Vertrauenswürdigkeitsinformationen Informationen dahingehend beinhalten, ob eine bestimmte Qualifikation oder eine bestimmte Prüfung der zweiten physischen Entität gemäß einem vorgegebenen Standard durchgeführt wurde, ob diese Prüfung derzeit noch gültig ist, wie lange sie noch gültig ist, durch wen diese durchgeführt wurde, beispielsweise ob eine unabhängige dritte Partei die Prüfung durchgeführt hat, oder dergleichen.

Gemäß verschiedenen Ausführungsformen der Erfindung wird einen Mechanismus zum dynamischen Austausch und zur Vereinbarung von Vertrauensbeziehungen zwischen den verschiedenen physischen Entitäten 1a, 2a, vorgeschlagen, die jeweils durch eine virtuelle Entität 1b, 2b, nämlich deren digitalen Zwilling, repräsentiert werden, und es wird die Interoperabilität der ausgetauschten Vertrauenswürdigkeitsinformationen gewährleistet.

In einem beispielhaften Anwendungsfall kann die erste physische Entität 1a ein Gerät darstellen und die zweite Entität 2a sowie die dritte Entität 3a stellen Komponenten dar, die Teil der erste physischen Entität 1a sein können oder separat dazu vorliegen.

Beispielsweise kann jeder der zugehörigen virtuellen Entitäten 1b, 2b, 3b ein Vertrauenswürdigkeitsprofil hinzugefügt werden, das die entsprechenden Vertrauenswürdigkeitsinformationen 5 beinhaltet. Das jeweilige Vertrauenswürdigkeitsprofil kann zum Beispiel auch die jeweiligen Vertrauenswürdigkeitserwartungen, beispielsweise gegeben durch die entsprechenden Definitionen und/oder Beschreibungen 4, entlang einer Lieferkette beinhalten.

Die Vertrauenswürdigkeitsinformationen 5 können in einem beliebigen Format bereitgestellt werden, zum Beispiel als Text, XML, RDF oder JSON. Sie können mit einer kryptografischen Prüfsumme digital signiert und/oder verschlüsselt werden. In einer Variante können die Vertrauenswürdigkeitsinformationen 5 als überprüfbarer Nachweis (englisch: "verifiable credential") oder als überprüfbare Darstellung (englisch:"verifiable presentation") bereitgestellt werden.

In verschiedenen Ausführungsformen der Erfindung kann die erste physische Entität 1a, beispielsweise das Gerät, die Vertrauenswürdigkeit der zweiten physischen Entität 2a, beispielsweise einer Komponente des Geräts oder einer externen Komponente, mit der es interagieren soll oder mit der es interagiert, auf der Grundlage seiner eigenen Vertrauenswürdigkeitserwartungen überprüfen und sicherstellen.

Auf der Grundlage einer definierten Vertrauensentscheidungspolitik, insbesondere gegeben durch die Regel 6, vergleicht die erste physische Entität 1a und/oder die erste virtuelle Entität 1b die von der zweiten virtuellen Entität 2b empfangenen Vertrauenswürdigkeitsinformationen 5 betreffend die zweite physische Entität 2a mit seinen zweiten virtuellen Entität 2b und stellt basierend darauf fest, ob die zweite physische Entität 2a vertrauenswürdig ist. Auf der Grundlage des Abgleichs und der Bewertung kann entweder eine binäre Schlussfolgerung gezogen werden, ob die durch die zweite physische Entität 2a gegebene Komponente in das durch die erste physische Entität 1a gegebene Gerät integriert, also insbesondere akzeptiert, werden soll oder nicht.

Alternativ kann ein Verhalten auf der Grundlage des ermittelten Vertrauensgrads, das heißt dem ermittelten Maß für die Vertrauenswürdigkeit, festgelegt werden. Erfüllt die zweite physische Entität 2a beispielsweise nur einige wenige der Vertrauenswürdigkeitserwartungen, so kann die erste virtuelle Entität 1b beschließen, der zweiten physischen Entität 2a teilweise zu vertrauen, und es kann zum Beispiel eine stringente geräteinterne Sicherheitsrichtlinie aktiviert werden, die der Komponente nur den Zugriff auf notwendige Dateien erlaubt. Bei einer nicht vertrauenswürdigen zweiten physischen Entität 2a kann eine geräteinterne Sicherheitsrichtlinie, die beispielsweise den Zugriff auf Netzwerkfunktionen, ein Dateisystem und/oder kritische Ressourcen kontrolliert, in einen Durchsetzungsmodus versetzt werden.

Die Richtlinie für die Vertrauensentscheidung kann vordefiniert oder flexibel sein, sodass auch zusätzliche dynamische Bedingungen berücksichtigt werden können. So können beispielsweise bestimmte Produktionsschritte ein höheres Maß an Vertrauen erfordern als andere Produktionsschritte.

Das beschriebene Beispiel kann auch dahingehend erweitert werden, dass die zweite und/oder dritte physische Entität 2a, 3a die Vertrauenswürdigkeit der ersten physischen Entität 1a in analoger Weise überprüfen. Dies ermöglicht es beispielsweise, dass die zweite und/oder dritte physische Entität 2a, 3a nur dann mit der ersten physischen Entität 1a interagiert, wenn davon ausgegangen wird, dass sie vertrauenswürdig ist. Abhängig vom Vertrauensniveau kann die Interaktion auch entsprechend eingeschränkt werden.

Das beschriebene Beispiel kann weiterhin auch dahingehend erweitert werden, dass die zweite virtuelle Entität 2b mit der zweiten physischen Entität 2a interagiert, um eine aktuelle Vertrauenswürdigkeitsinformationen von der physischen Entität 2a zu ermitteln oder um die Aktualität der bei der zweiten virtuellen Entität 2b vorliegenden Vertrauenswürdigkeitsinformation zu prüfen, bevor die zweite virtuelle Entität 2b die Vertrauenswürdigkeitsinformationen 5 bereitstellt. Das Ermitteln der aktuellen Vertrauenswürdigkeitsinformation durch die zweite virtuelle Entität 2b kann z.B. wiederholt, periodisch oder nach Übermittlung der Beschreibung 4 erfolgen. Es ist möglich, dass die Beschreibung 4 eine Angabe umfasst, die angibt, ob durch die zweite virtuelle Entität 2b eine Aktualitätsprüfung vor Bereitstellen der Vertrauenswürdigkeitsinformationen 5 erfolgen soll.

Sobald eine physische Entität akzeptiert wurde, kann die entsprechende AAS beispielsweise die Fähigkeiten der akzeptierten physischen Entität speichern, indem sie eine Liste aller physischen Entitäten führt, oder sie kann nur einen Link oder Zugangspfad zur ausgetauschten Version dieser Fähigkeiten speichern. Das erste Szenario ist am Beispiel der ersten virtuellen Entität 1b schematisch in FIG 2 dargestellt, die hier die verschiedenen Vertrauenswürdigkeitserwartungen in Form entsprechender Definitionen und/oder Beschreibungen 4, 4', 4" speichert sowie die zugehörigen erhaltenen Vertrauenswürdigkeitsinformationen 5, 5', 5".

Zusätzlich können die Vertrauenswürdigkeitsinformationen der ersten physischen Entität 1a, also etwa des Geräts, auf der Grundlage der Vertrauenswürdigkeitsinformationen der akzeptierten physischen Entitäten 2a, 3a, also etwa von einem zweiten Gerät oder einem dritten Gerät oder von Komponenten des Geräts selbst, angepasst oder aktualisiert werden.

Die digitalen Zwillinge können also das Vertrauenswürdigkeitsprofil ihrer entsprechenden physischen Entitäten verwalten und die Vertrauenswürdigkeit von Peer-Entitäten verifizieren. Der Datenaustausch beziehungsweise die Datenkommunikation zwischen den physischen Entitäten kann in Abhängigkeit von der Überprüfung der Vertrauenswürdigkeit zwischen den entsprechenden digitalen Zwillingen erlaubt, verweigert oder eingeschränkt werden. Die Struktur des Vertrauenswürdigkeitsprofils einer Komponente kann in den Daten des entsprechenden digitalen Zwillings enthalten sein, die zum Beispiel als jeweilige AAS ausgestaltet sein können. Alternativ dazu kann die jeweilige AAS einen Verweis auf die Struktur des Vertrauenswürdigkeitsprofils enthalten. Der Verweis kann eine URL, ein URI (englisch: "uniform resource identifier"), ein kryptografischer Hash-Wert oder ein Verweis auf eine Transaktion einer verteilten Datenbank sein, insbesondere auf eine Transaktion eines sogenannten verteilten Ledgers oder einer Blockchain-Infrastruktur.

Die physischen Entitäten und ihre entsprechenden digitalen Zwillinge können durch an sich bekannte technische Mittel identifiziert oder authentifiziert werden, zum Beispiel durch eine Seriennummer oder ein digitales Geräte- und/oder Maschinenzertifikat. In einer Variante können dezentralisierte verteilte Identifikatoren verwendet werden, die mit einem verteilten Ledger im Sinne einer Blockchain verwaltet werden können. Eine durch einen überprüfbaren Berechtigungsnachweis oder durch eine überprüfbare Darstellung bestätigte Behauptung kann verwendet werden, um die Identität einer physischen Entität sicher mit der Identität des entsprechenden digitalen Zwillings zu verbinden.

Zur Erläuterung wurde unter anderem das Beispiel eines Geräts und seiner Komponenten verwendet. Die Erfindung ist aber nicht darauf beschränkt und kann insbesondere für beliebige I4.0-Einheiten mit einem zugehörigen digitalen Zwilling, insbesondere AAS, angewendet werden.

Verschiedene Ausführungsformen der Erfindung ermöglichen es, die Vertrauenswürdigkeit zwischen verschiedenen I4.0-Entitäten während ihres gesamten Lebenszyklus entlang einer Lieferkette und/oder auch während des Betriebs herzustellen. Er ermöglicht es den Entitäten nicht nur, die Vertrauenswürdigkeit der Entitäten, mit denen sie interagieren, zu bestimmen, sondern auch ihre eigenen Sicherheitsrichtlinien und Sicherheitsmaßnahmen auf der Grundlage der Fähigkeiten der interagierenden Entitäten zu aktualisieren.

Die Interaktion kann jede Art von Interaktion sein, zum Beispiel das sogenannte Onboarding einer Entität, die Kommunikation von Maschine zu Maschine und so weiter. So können verschiedene Maschinen eines Industriestandorts auch Fähigkeiten anfragen oder die Vertrauenswürdigkeit einer anderen Maschine feststellen und dann entscheiden, welche Informationen sie mit ihr teilen können. Es werden also die Interoperabilität und die einfache Integration verschiedener I4.0-Einheiten auf vertrauenswürdige Weise unterstützt.

## Patentansprüche

1. Verfahren zur Interaktion einer ersten physischen Entität (1a) mit einer zweiten physischen Entität (2a), wobei mittels der ersten physischen Entität (1a) eine Interaktionsanfrage von der zweiten physischen Entität (2a) erhalten wird, **dadurch gekennzeichnet, dass**
- mittels der ersten physischen Entität (1a) in Reaktion auf die Interaktionsanfrage eine Verifikationsanfrage an eine erste virtuelle Entität (1b), welche eine virtuelle Repräsentation der ersten physischen Entität (1a) ist, übermittelt wird;
- mittels der ersten virtuellen Entität (1b) in Reaktion auf die Verifikationsanfrage ein Maß für eine Vertrauenswürdigkeit der zweiten physischen Entität (2a) bestimmt wird; und
- eine Interaktion der ersten physischen Entität (1a) mit der zweiten physischen Entität (2a) abhängig von dem Maß für die Vertrauenswürdigkeit der zweiten physischen Entität (2a) zugelassen wird.

2. Verfahren nach Anspruch 1, wobei die erste virtuelle Entität (1b) als erste Verwaltungsschale ausgestaltet ist.

3. Verfahren nach einem der vorhergehenden Ansprüche, wobei mittels der ersten virtuellen Entität (1b)
- in Reaktion auf die Verifikationsanfrage Vertrauenswürdigkeitsinformationen (5) betreffend wenigstens ein Vertrauenswürdigkeitskriterium der zweiten physischen Entität (2a) bestimmt werden; und
- das Maß für die Vertrauenswürdigkeit der zweiten physischen Entität (2a) abhängig von den Vertrauenswürdigkeitsinformationen (5) bestimmt wird.

4. Verfahren nach Anspruch 3, wobei
- mittels der ersten virtuellen Entität (1b) in Reaktion auf die Verifikationsanfrage eine Aufforderung zur Bereitstellung der Vertrauenswürdigkeitsinformationen (5) an eine zweite virtuelle Entität (2b), welche eine virtuelle Repräsentation der zweiten physischen Entität (2a) ist, übermittelt wird; und
- mittels der zweiten virtuellen Entität (2b) in Reaktion auf die Aufforderung die Vertrauenswürdigkeitsinformationen (5) an die erste virtuelle Entität (1b) übermittelt werden.

5. Verfahren nach Anspruch 4, wobei die Aufforderung zur Bereitstellung der Vertrauenswürdigkeitsinformationen (5) wenigstens eine Definition und/oder Beschreibung (4) des wenigstens einen Vertrauenswürdigkeitskriteriums beinhaltet.

6. Verfahren nach einem der Ansprüche 4 oder 5, wobei die zweite virtuelle Entität (2b) als Verwaltungsschale ausgestaltet ist.

7. Verfahren nach einem der vorhergehenden Ansprüche, wobei mittels der ersten virtuellen Entität (1b)
- eine vorgegebene Regel (6) zur Bewertung der Vertrauenswürdigkeit der zweiten physischen Entität (2a) erhalten wird; und
- das Maß für die Vertrauenswürdigkeit der zweiten physischen Entität (2a) abhängig von der Regel (6) bestimmt wird.

8. Verfahren nach einem der vorhergehenden Ansprüche, wobei das Maß für die Vertrauenswürdigkeit der zweiten physischen Entität (2a) als binäres Maß bestimmt wird, und die Interaktion der zweiten physischen Entität (1a) mit der ersten physischen Entität (2a)
- zugelassen wird, wenn das Maß für die Vertrauenswürdigkeit der zweiten physischen Entität (2a) einem ersten vorgegebenen Wert entspricht; und/oder
- nicht zugelassen wird, wenn das Maß für die Vertrauenswürdigkeit der zweiten physischen Entität (2a) einem zweiten vorgegebenen Wert entspricht.

9. Verfahren nach einem der Ansprüche 1 bis 7, wobei das Maß für die Vertrauenswürdigkeit der zweiten physischen Entität (2a) bestimmt wird, indem eine von drei oder mehr Vertrauenswürdigkeitsstufen für die zweite physische Entität (1a) bestimmt wird.

10. Verfahren nach Anspruch 9, wobei die Interaktion der zweiten physischen Entität (1a) mit der ersten physischen Entität (2a)
- zugelassen wird, wenn das Maß für die Vertrauenswürdigkeit der zweiten physischen Entität (2a) einer ersten Vertrauenswürdigkeitsstufe der drei oder mehr Vertrauenswürdigkeitsstufen entspricht; und/oder
- eingeschränkt zugelassen wird, wenn das Maß für die Vertrauenswürdigkeit der zweiten physischen Entität (2a) einer zweiten Vertrauenswürdigkeitsstufe der drei oder mehr Vertrauenswürdigkeitsstufen entspricht; und/oder
- nicht zugelassen wird, wenn das Maß für die Vertrauenswürdigkeit der zweiten physischen Entität (2a) einer dritten Vertrauenswürdigkeitsstufe der drei oder mehr Vertrauenswürdigkeitsstufen entspricht.

11. System (7) mit einer ersten physischen Entität (1a), die dazu eingerichtet ist, von einer zweiten physischen Entität (2a) eine Interaktionsanfrage zu erhalten,
**dadurch gekennzeichnet, dass**
- das System (7) eine erste virtuelle Entität (1b) aufweist, welche eine virtuelle Repräsentation der ersten physischen Entität (1a) ist;
- die erste physische Entität (1a) dazu eingerichtet ist, in Reaktion auf die Interaktionsanfrage eine Verifikationsanfrage an die erste virtuelle Entität (1b) zu übermitteln;
- die erste virtuelle Entität (1b) dazu eingerichtet ist, in Reaktion auf die Verifikationsanfrage ein Maß für eine Vertrauenswürdigkeit der zweiten physischen Entität (2a) zu bestimmen; und
- die erste physische Entität (1a) und/oder die erste virtuelle Entität (1b) dazu eingerichtet sind, eine Interaktion der ersten physischen Entität (1a) mit der zweiten physischen Entität (2a) abhängig von dem Maß für die Vertrauenswürdigkeit der zweiten physischen Entität (2a) zuzulassen.

12. System (7) nach Anspruch 11, wobei das System (7) die zweite physische Entität (1a) enthält und diese dazu eingerichtet ist, die Interaktionsanfrage an die erste physische Entität (1a) zu übermitteln.

13. System (7) nach einem der Ansprüche 11 oder 12, wobei die erste virtuelle Entität (1b) dazu eingerichtet ist,
- in Reaktion auf die Verifikationsanfrage Vertrauenswürdigkeitsinformationen (5) betreffend wenigstens ein Vertrauenswürdigkeitskriterium der zweiten physischen Entität (2a) zu bestimmen; und
- das Maß für die Vertrauenswürdigkeit der zweiten physischen Entität (2a) abhängig von den Vertrauenswürdigkeitsinformationen (5) zu bestimmen.

14. System (7) nach Anspruch 13, wobei
- das System (7) eine zweite virtuelle Entität (2b) aufweist, welche eine virtuelle Repräsentation der zweiten physischen Entität (2a) ist;
- die erste virtuelle Entität (1b) dazu eingerichtet ist, in Reaktion auf die Verifikationsanfrage eine Aufforderung zur Bereitstellung der Vertrauenswürdigkeitsinformationen (5) an die zweite virtuelle Entität (2b) zu übermitteln; und
- die zweite virtuelle Entität (2b) dazu eingerichtet ist, in Reaktion auf die Aufforderung die Vertrauenswürdigkeitsinformationen (5) an die erste virtuelle Entität (1b) zu übermitteln.

15. Computerprogrammprodukt mit Befehlen, die bei Ausführung durch ein System (7) nach einem der Ansprüche 11 bis 14 das System (7) dazu veranlassen, ein Verfahren nach einem der Ansprüche 1 bis 10 durchzuführen.
